# EUROPÄISCHE PATENTSCHRIFT

(11) **EP 0 667 223 B1**
(45) Veröffentlichungstag und Bekanntmachung des Hinweises auf die Patenterteilung: **29.04.1998**
(21) Anmeldenummer: 95100805.1
(22) Anmeldetag: 21.01.1995
(51) Int. Cl.: B29C 45/17, C01B 21/04

(54) **Vorrichtung zum Erzeugen von Hochdruck-Stickstoff**
Apparatus for generating high pressure nitrogen
Dispositif pour générer de l'azote à haute pression

(30) Priorität: 09.02.1994 DE 4404072
(43) Veröffentlichungstag der Anmeldung: 16.08.1995
(73) Patentinhaber: Druckluft Dannöhl GmbH, D-46236 Bottrop (DE)
(72) Erfinder: Dannöhl, Peter, D-46236 Bottrop (DE)
(74) Vertreter: Hosbach, Hans Ulrich

(56) Entgegenhaltungen:
- DE-A- 4 126 676
- PATENT ABSTRACTS OF JAPAN vol. 17 no. 268 (M-1416) ,25.Mai 1993 & JP-A-05 004253 (ASAHI CHEM IND CO LTD)
- PATENT ABSTRACTS OF JAPAN vol. 18 no. 25 (M-1542) ,14.Januar 1994 & JP-A-05 261751 (TSUKISHIMA KIKAI CO LTD)
- PATENT ABSTRACTS OF JAPAN vol. 18 no. 650 (M-1719) ,9.Dezember 1994 & JP-A-06 254893 (YAZAKI KAKO)

## Beschreibung

Die Erfindung betrifft eine Vorrichtung zum Erzeugen von unter Hochdruck stehendem Stickstoff für mindestens einen Verbraucher, insbesondere für mindestens eine Spritzgießmaschine, mit einem aufblasbaren Ballon, der über ein erstes Magnetventil an eine Stickstoffquelle angeschlossen ist, einem Hochdruck-Speicherbehälter, der an den Verbraucher anschließbar ist, einem Hochdruckverdichter, der saugseitig an den Ballon und druckseitig an den Speicherbehälter angeschlossen ist, einer Steuereinrichtung für das erste Magnetventil und den Hochdruckverdichter, wobei die Steuereinrichtung einen von dem Ballon betätigten Füllstandssensor und einen mit dem Speicherbehälter verbundenen Druckschalter umfaßt, und mit einer mit dem aufblasbaren Ballon verbundenen und an den Verbraucher anschließbaren Rückgewinnungsleitung für den im Verbraucher entspannten Stickstoff, wobei der Füllstandssensor einen oberen Schaltpunkt, an dem er den Verdichter in Betrieb setzt und das erste Magnetventil schließt, sowie einen unteren Schaltpunkt aufweist, an dem er in Abhängigkeit vom Druck im Speicherbehälter entweder das erste Magnetventil öffnet oder den Verdichter abstellt.

Eine derartige Vorrichtung ist aus der DE 41 26 676 A1 bekannt. Sie dient insbesondere zur Gasinjektion in der modernen Spritzgießtechnik, um im Inneren der Spritzgußteile Hohlräume zu erzeugen. Der Injektionsdruck liegt dabei über 300 bar.

Der obere Schaltpunkt des Füllstandssensors entspricht dem weitgehend gefüllten Zustand des Ballons und der untere dem weitgehend entleerten. Am oberen Schaltpunkt wird der Verdichter in Betrieb gesetzt und das erste Magnetventil geschlossen. Während der ersten Betriebsstufe, nämlich während des Anfahrbetriebes, bewirkt der untere Schaltpunkt des Füllstandssensors ein Öffnen des ersten Magnetventils bei laufendem Verdichter. Sobald der Druck im Speicherbehälter einen ersten eingestellten Wert erreicht hat, beginnt die zweite Betriebsstufe. Der Druckschalter schließt das erste Magnetventil und wirkt auf den unteren Schaltpunkt des Füllstandssensors ein, und zwar derart, daß dieser bei seiner Aktivierung den Verdichter stillsetzt. Tritt nun Gas durch die Rückgewinnungsleitung in den Ballon ein und bläst diesen soweit auf, daß der Füllstandssensor seinen oberen Schaltpunkt erreicht, so wird der Verdichter in Betrieb gesetzt. Die Vorrichtung arbeitet also im Kreislauf. Diese Arbeitsweise wird fortgesetzt, bis der Druck im Speicherbehälter unter einen zweiten, auf ein niedrigeres Niveau eingestellten Wert fällt, woraufhin der Druckschalter das erste Magnetventil öffnet und die erste Betriebsstufe wieder einstellt.

Die Stickstoffversorgung erfolgte bisher über eine Flaschenbatterie. Dabei können Versorgungsengpässe auftreten, selbst wenn mit großzügiger Vorratshaltung gearbeitet wird. Hinzu kommt, daß ein derartiger Betrieb unwirtschaftlich ist, da der Stickstoff mit ca. 200 bar angeliefert wird, während für das Befüllen des Ballons eine geringe Druckhöhe oberhalb des Atmosphärendrucks ausreicht.

Der Erfindung liegt die Aufgabe zugrunde, die Vorrichtung der eingangs genannten Art von einer Stickstoffanlieferung unabhängig zu machen und gleichzeitig in ihrer Wirtschaftlichkeit zu verbessern.

Zur Lösung dieser Aufgabe ist die Vorrichtung nach Anspruch 1 dadurch gekennzeichnet, daß dem ersten Magnetventil ein abwechselnd mit diesem betätigtes zweites Magnetventil zugeordnet ist, welches ausgangsseitig über eine Drossel mit der Atmosphäre in Verbindung steht, daß die Magnetventile eingangsseitig über eine einstellbare Drossel an mindestens einen Stickstoff-Separator angeschlossen sind, der von einem Luftverdichter gespeist wird, und daß dem Ausgang des Separators ein Stickstoff-Reinheitssensor zugeordnet ist, der zusätzlich zu der Steuereinrichtung die Magnetventile betätigt.

Stickstoff-Separatoren gehören zum Stande der Technik. Sie arbeiten mit einer Membran und trennen den Luftstickstoff vom Sauerstoff. Der Reinheitsgrad ist vom Gegendruck in der Stickstoffleitung hinter dem Separator, von der durch den Separator durchgesetzten Luftmenge und von der Betriebstemperatur des Separators abhängig. Je höher die geforderte Reinheit, desto geringer ist die Liefermenge.

Der Reinheitsgrad wird erfindungsgemäß durch die einstellbare Drossel vorgewählt und vom Reinheitssensor überwacht. Im Anfahrzustand ist das erste Magnetventil geschlossen, während das zweite Magnetventil seine Öffnungsstellung einnimmt. Der Stickstoffgegendruck wird sodann von der dem zweiten Magnetventil nachgeschalteten Drossel bestimmt und auf hohem Niveau gehalten. Sobald der gewünschte Reinheitsgrad, der über 99% liegen kann, erreicht ist, schaltet der Reinheitssensor die beiden Magnetventile um, sofern die Steuereinrichtung dies zuläßt. Sodann ist eine Befüllung des Ballons möglich. Signalisiert der Reinheitssensor, daß der gewünschte Reinheitsgrad nicht mehr erreicht wird, so erfolgt wiederum eine Umschaltung der beiden Magnetventile, so daß eine Befüllung des Ballons mit verunreinigtem Stickstoff verhindert wird. Der Reinheitssensor mißt den Sauerstoffgehalt im Stickstoff.

Die Vorrichtung verfügt also über eine Stickstoff-Eigenversorgung und ist damit unabhängig von Zulieferung und Lagerhaltung. Ihre Arbeitsweise zeichnet sich durch hohe Wirtschaftlichkeit aus, da der Luftverdichter lediglich die notwendige Luftmenge bei dem für den Betrieb des Separators und das Befüllen des Ballons erforderlichen Druck liefern muß. Hinzu kommt, daß die Reinheit des Stickstoffs den jeweiligen Erfordernissen angepaßt werden kann.

Die hierzu vorgesehene einstellbare Drossel kann von Hand betätigt werden. Vorteilhafter ist es u.U., daß der Reinheitssensor die einstellbare Drossel steuert, und zwar in Abhängigkeit von dem jeweils vorgewählten Reinheitsgrad. Ferner ist dem Reinheitssensor vorzugsweise eine Alarmfunktion zugeordnet.

Um Störfällen vorzubeugen, die die Stickstofferzeugung unterbrechen oder in kritischen Phasen den Reinheitsgrad unzulässig senken, kann es vorteilhaft sein, daß stromab des Separators eine Einlaßleitung zur Fremdeinspeisung von Stickstoff vorgesehen ist und daß der Füllstandssensor einen unter dem unteren Schaltpunkt liegenden dritten Schaltpunkt aufweist, an dem er bei geöffnetem ersten Magnetventil die Fremdeinspeisung zuschaltet. Allerdings handelt es sich hierbei um eine reine Notvorsorge, da die Vorrichtung aufgrund der Stickstoffrückgewinnung aus dem Verbraucher weitestgehend im Kreislauf arbeitet.

Dieser Kreislaufbetrieb bringt einen zusätzlichen Vorteil mit sich. Beim Kreislaufbetrieb ist das erste Magnetventil geschlossen, während das zweite Magnetventil seine Öffnungsstellung einnimmt. Der Stickstoffgegendruck des Separators wird also bestimmt durch die im Querschnitt sehr enge, dem zweiten Magnetventil nachgeschaltete Drossel. Dies bewirkt automatisch einen Anstieg des Reinheitsgrades, so daß die Sicherheit der späteren Stickstoffversorgung erhöht wird.

Nach einem weiteren vorteilhaften Merkmal weist der Füllstandssensor einen unter dem dritten Schaltpunkt liegenden vierten Schaltpunkt auf, an dem er bei geöffnetem erstem Magnetventil den Hochdruckverdichter abstellt. Hierbei handelt es sich um eine Notabschaltung für den Fall, daß der aufblasbare Ballon weder vom Separator noch von der Fremdeinspeisung ausreichend Stickstoff erhält, um den Hochdruckverdichter angemessen zu versorgen.

In wesentlicher Weiterbildung der Erfindung ist die Vorrichtung ferner dadurch gekennzeichnet, daß der Luftverdichter ein durch Öleinspritzung gekühlter Kompressor ist, dem luftauslaßseitig ein Luftkühler mit Kondensatabscheider und ölauslaßseitig ein Ölkühler nachgeschaltet sind, und daß in Reihe vor dem Ölkühler und in Reihe hinter dem Kondensatabscheider ein Wärmetauscher zum Vorwärmen der gekühlten Luft unter Nutzung der Abwärme des Öls vorgesehen ist. Die Kühlung des Kompressors, bei dem es sich um einen Schraubenkompressor handeln kann, erfolgt durch Einspritzung von öl in die zu verdichtende Luft. Öl und verdichtete Luft verlassen den Kompressor auf getrennten Wegen, wobei allerdings ein bestimmter Ölanteil in der Luft verbleibt. Letztere wird anschließend gekühlt, um durch eine Filterkombination diesen Ölanteil zusammen mit dem der Luft entzogenen Wasser als Kondensat abzuscheiden. Auch das Öl bedarf der Kühlung, bevor es in den Kompressor zurückgefördert wird. Die dabei freigesetzte Wärme wird nun dazu benutzt, die gekühlte Luft wieder aufzuheizen und auf diejenige Temperatur zu bringen, bei der der Separator seinen optimalen Wirkungsgrad entwickelt. Die erforderliche Energie wird also von der Abwärme geliefert, so daß die Vorrichtung mit besonders guter Wirtschaftlichkeit arbeitet.

Da die Abwärme im Überschuß anfällt, ist es vorteilhaft, daß ein mit der Öltemperatur beaufschlagtes Thermostatventil den Ölfluß zum Ölkühler und zu einer den Ölkühler umgehenden Bypassleitung regelt. Das Öl strömt zuerst durch den Wärmetauscher und von dort zum Thermostatventil, von wo aus es in Abhängigkeit von seiner Temperatur über die Bypassleitung direkt zum Kompressor zurückgeführt oder aber vorher über den Ölkühler geleitet und dort weiter abgekühlt wird. Auf diese Weise wird das Temperaturniveau des Kompressors und somit auch das des Wärmetauschers konstant gehalten.

Ferner ist es vorteilhaft, den Wärmetauscher zur Nutzung der Abstrahlungswärme in nächster Nähe des Separators anzuordnen. Der Separator wird also zusätzlich extern beheizt, und zwar wiederum unter Nutzung der über das Öl des Kompressors anfallenden Abwärme.

Vorzugsweise ist dem Kondensatabscheider kondensatauslaßseitig ein Öl-Wasser-Trenner nachgeschaltet. Dies dient der Entsorgung des bei der Druckluftkühlung anfallenden Kondensats.

Als erfindungswesentlich offenbart gelten auch solche Kombinationen der erfindungsgemäßen Merkmale, die von den vorstehend diskutierten Verknüpfungen abweichen.

Die Erfindung wird im folgenden anhand eines bevorzugten Ausführungsbeispiels im Zusammenhang mit der beiliegenden Zeichnung näher erläutert. Die Zeichnung zeigt in:
- Fig. 1: in schematischer Darstellung eine z.T. aufgebrochene Vorderansicht der Vorrichtung;
- Fig. 2: ein Detail der Vorrichtung nach Fig. 1;
- Fig. 3: ein vereinfachtes Blockschaltbild eines Teils der Vorrichtung nach Fig. 1.

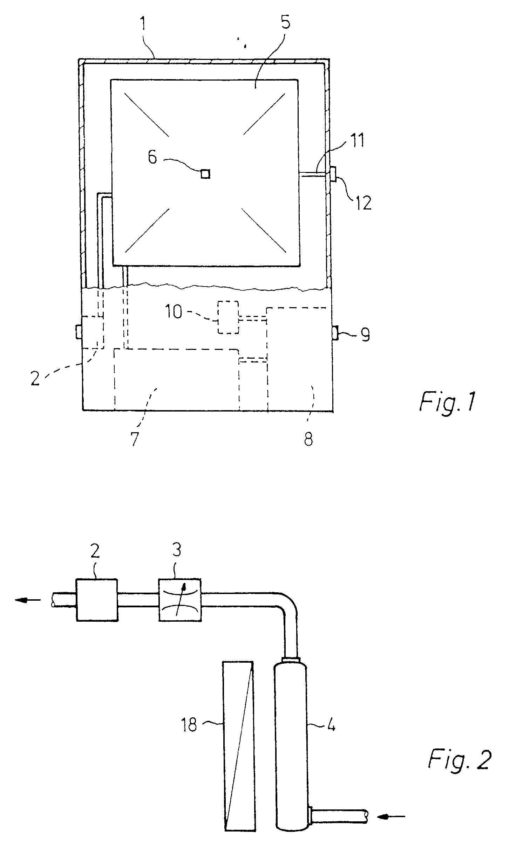

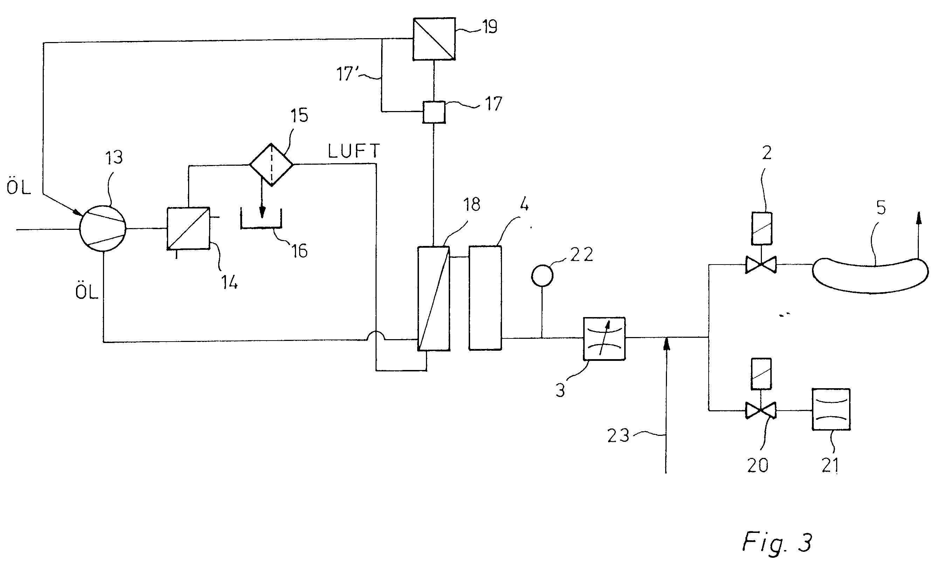

Gemäß Fig. 1 weist die Vorrichtung ein Gehäuse 1 auf, welches u.a. die z.T schmatisch angedeuteten Baugruppen enthält. Ein erstes Magnetventil 2 ist eingangsseitig unter Zwischenschaltung einer verstellbaren Drossel 3 an eine Batterie von Membran-Separatoren 4 angeschlossen, s. Fig. 2 und 3. Vom ersten Magnetventil 2 aus gelangt der Stickstoff in einen aufblasbaren Ballon 5, der mit einem Füllstandssensor 6 versehen ist. Der Ballon 5 steht mit der Saugseite eines Hochdruckverdichters 7 in Verbindung, welcher in einen Hochdruck-Speicherbehälter 8 hineinfördert. Über einen Anschluß 9 ist der Speicherbehälter 8 an einen Verbraucher, hier an eine Spritzgießmaschine anschließbar. Der Druck im Speicherbehälter 8 wirkt auf einen Druckschalter 10 ein.

Ferner ist eine Rückführleitung 11 vorgesehen, die über einen Anschluß 12 ebenfalls an die Spritzgießmaschine anschließbar ist und dazu dient, den in der Spritzgießmaschine entspannten Stickstoff in den aufblasbaren Ballon 5 zurückzuleiten.

Die Steuerung der Vorrichtung, soweit bisher beschrieben, erfolgt über den Füllstandssensor 6 und den Druckschalter 10. Aus Gründen der Übersichtlichkeit wurde auf die Darstellung der Steuerleitungen verzichtet.

Beim Anfahren wird, sofern im Speicherbehälter 8 der Druck unterhalb eines oberen eingestellten Druckwertes liegt, zuerst die Stickstofferzeugungseinheit in Betrieb genommen. Sobald der gewünschte Reinheitsgrad erreicht ist, öffnet das erste Magnetventil 2. Sodann wird Stickstoff bei annähernd Atmosphärendruck in den Ballon 5 eingeblasen. Wenn der Füllstandssensor 6 seinen oberen Schaltpunkt erreicht, wird bei weiterhin geöffnetem erstem Magnetventil 2 der Hochdruckverdichter 7 in Betrieb genommen, wodurch der Füllstand im Ballon 5 abnimmt. Sofern die abgesaugte Gasmenge größer ist als die mit der eingestellten Reinheit von der Stickstofferzeugungseinheit gelieferte Menge, erreicht der Füllstandssensor 6 seinen unteren Schaltpunkt, wodurch bei weiterlaufender Stickstofferzeugungseinheit der Hochdruckverdichter abgeschaltet wird, so daß sich der Ballon 5 wieder füllt. Dies ergibt sich auch dann, wenn die abgesaugte Gasmenge kleiner als die Liefermenge der Stickstofferzeugungseinheit ist. Sobald der Füllstandssensor 6 seinen oberen Schaltpunkt wieder erreicht, wird der Hochdruckverdichter, sofern er abgeschaltet war, wieder eingeschaltet. Außerdem wird das erste Magnetventil 2 geschlossen, während ein zweites Magnetventil 20 (Fig. 3) in seine Öffnungsstellung gelangt. Während dieser Phase wird kein Stickstoff mehr in den Ballon 5 eingespeist. Gleichzeitig ergibt sich durch das Abblasen über das zweite Magnetventil 20 und eine nachgeschaltete Drossel 21 mit relativ kleinem Durchlaß (Fig. 3) eine Steigerung des Reinheitsgrades. Sobald der Hochdruckverdichter 7 den Ballon 5 wieder soweit geleert hat, daß der Füllstandssensor 6 seinen unteren Schaltpunkt erreicht, erfolgt erneut ein Umschalten der beiden Magnetventile 2 und 20. Dieses Arbeitsspiel wird fortgesetzt, bis der Druckschalter das Erreichen des oberen eingestellten Drucks im Speicherbehälter 8 signalisiert. Sodann wird unter gleichzeitigem Stillsetzen der Stickstofferzeugungseinheit das erste Magnetventil 2 geschlossen. Außerdem wird der Verdichter 7 stillgesetzt, sobald der Füllstandssensor 6 seinen unteren Schaltpunkt erreicht. Das periodische Füllen des aufblasbaren Ballons 5 erfolgt nun über die Rückgewinnungsleitung 11, so daß also der Stickstoff im Kreislauf geführt wird. Sobald der Druck im Speicherbehälter 8 einen unteren eingestellten Wert unterschreitet, schaltet der Druckschalter 10 auf den Anfahrzustand zurück.

Es wird also weitgehend im Kreislauf gearbeitet, wobei eine Entnahme aus den Separatoren 4 nur erforderlich wird, wenn die unvermeidbaren Leckverluste eine entsprechende Druckminderung im Speicherbehälter 8 hervorgerufen haben. Die Vorrichtung arbeitet mit hoher Wirtschaftlichkeit bei einfacher Konstruktion und kostengünstiger Fertigung.

Fig. 3 zeigt schematisch den die Stickstofferzeugung betreffenden Teil der Vorrichtung.

Luft wird in einem Niederdruck-Luftverdichter 13 verdichtet und in einem Luftkühler 14 gekühlt, um anschließend in einem als Filterkombination ausgebildeten Kondensatabscheider 15 gereinigt zu werden. Das Kondensat gelangt in einen Öl-Wasser-Trenner 16.

Bei dem Luftverdichter 13 handelt es sich um einen Schraubenkompressor, der durch Öleinspritzung gekühlt wird. Das aufgeheizte Öl gelangt zu einem Wärmetauscher 18, der, wie in Fig. 2 ersichtlich, zur Nutzung der Abstrahlwärme direkt vor den Separatoren 4 angeordnet ist. Der Wärmetauscher 18 dient dazu, die gekühlte Luft aufzuheizen, bevor sie in die Separatoren 4 gelangt. Unter Nutzung der Abwärme aus dem Öl arbeiten die Separatoren 4 mit optimalem Wirkungsgrad. Hinter dem Wärmetauscher 18 gelangt das Öl zu einem Thermostatventil 17, welches das Öl während einer kurzen Aufheizphase über eine Bypassleitung 17' direkt zum Luftverdichter 13 zurückführt. Nach der Aufheizphase wird das Öl durch einen konventionellen Ölkühler 19 geleitet und dort soweit gekühlt, daß das Temperaturniveau auf einem für die Separatoren 4 und den Luftverdichter 13 optimalen Wert konstant gehalten wird.

An die Separatoren 4 schließt sich die einstellbare Drossel 3 und an diese das erste Magnetventil 2 an. Parallel zum ersten Magnetventil 2 ist das zweite Magnetventil 20 geschaltet, gefolgt von der Drossel 21, die in die Atmosphäre bläst. Beide Magnetventile 2 und 20 unterliegen der Steuerung durch den Füllstandssensor 6 und werden gleichzeitig gegenläufig betätigt.

An der verstellbaren Drossel 3 wird der Reinheitsgrad des Stickstoffs eingestellt. Je geringer der Durchsatz, desto höher der Reinheitsgrad. Zur Überwachung dient ein Reinheitssensor 22, dem eine Alarmfunktion zugeordnet sein kann. Solange in der Anfahrphase der Reinheitsgrad den eingestellten Wert noch nicht erreicht hat, ist das erste Magnetventil 2 geschlossen, während das zweite Magnetventil 20 seine Öffnungsstellung einnimmt. Dabei bestimmt die Drossel 21, deren Querschnitt klein gehalten ist, den Gegendruck für die Separatoren 4. Meldet der Reinheitssensor die Betriebsbereitschaft des Aggregats, schalten die Magnetventile 2 und 20 jeweils um. Sie sind diesbezüglich miteinander gekoppelt. Ein erneutes Umschalten erfolgt, wenn der Reinheitssensor 22 während des Betriebes ein Absinken des Reinheitsgrades unter den Sollwert feststellt.

Im vorliegenden Fall wird die einstellbare Drossel 3 von Hand betätigt. Sie kann jedoch auch über den Reinheitssensor 22 geregelt werden.

Sobald der Füllstandssensor 6 des aufblasbaren Ballons 5 ein Schließen des ersten Magnetventils 2 fordert, wird gleichzeitig das zweite Magnetventil 20 geöffnet. Der Stickstoff wird sodann in die Atmosphäre abgeblasen, allerdings unter erhöhtem, von der Drossel 21 bestimmten Gegendruck, so daß die Anlage automatisch den Reinheitsgrad erhöht.

Wie durch eine Leitung 23 schematisch angedeutet, ist eine Möglichkeit zur Fremdeinspeisung von Stickstoff vorgesehen, um Notfälle zu kompensieren, mit deren Auftreten allerdings kaum zu rechnen ist, da die Anlage zwischen aufblasbarem Ballon und Verbraucher im Kreislauf arbeitet. Die Fremdeinspeisung wird gesteuert von dem Füllstandssensor 6 des aufblasbaren Ballons 5. Der Füllstandssensor 6 weist hierzu einen dritten, unter dem unteren Schaltpunkt liegenden Schaltpunkt ("Blase leer") auf. Die Anordnung des dritten Schaltpunktes unter dem unteren Schaltpunkt gewährleistet, daß das erste Magnetventil 2 geöffnet ist und das zweite Magnetventil 20 seine Schließstellung einnimmt.

Letzteres gilt auch für einen unter dem dritten Schaltpunkt liegenden vierten Schaltpunkt des Füllstandssensors 6. Am vierten Schaltpunkt wird der Hochdruckverdichter 7 abgestellt, da er nicht mehr ausreichend mit Stickstoff versorgt werden kann.

Im Rahmen der Erfindung sind durchaus Abwandlungsmöglichkeiten gegeben. So kann mit einem anderen Luftverdichter als einem Schraubenkompressor gearbeitet werden, so lange ausreichend Abwärme über das Öl zur Verfügung gestellt wird. Ferner kann die Drossel 21 verstellbar sein, um den Gegendruck für die Separatoren beim Freiblasen zu verändern, ggf. in Abhängigkeit von Informationen, die der Reinheitssensor liefert. Die Anordnung des Wärmetauschers direkt vor den Separatoren kann aufgegeben werden, sofern deren Wirkungsgrad allein durch Vorwärmung der Luft sein Optimum erreicht. Die Zahl der Separatoren ist nicht von kritischer Bedeutung; sie hängt ab von den jeweiligen Betriebsparametern.

## Patentansprüche

1. Vorrichtung zum Erzeugen von unter Hochdruck stehendem Stickstoff für mindestens einen Verbraucher, insbesondere für mindestens eine Spritzgießmaschine, mit
einem aufblasbaren Ballon (5), der über ein erstes Magnetventil (2) an eine Stickstoffquelle angeschlossen ist,
einem Hochdruck-Speicherbehälter (8), der an den Verbraucher anschließbar ist,
einem Hochdruckverdichter (7), der saugseitig an den Ballon und druckseitig an den Speicherbehälter angeschlossen ist,
einer Steuereinrichtung für das erste Magnetventil und den Hochdruckverdichter, wobei die Steuereinrichtung einen von dem Ballon betätigten Füllstandssensor (6) und einen mit dem Speicherbehälter verbundenen Druckschalter (10) umfaßt, und
mit einer mit dem aufblasbaren Ballon (5) verbundenen und an den Verbraucher anschließbaren Rückgewinnungsleitung (11) für den im Verbraucher entspannten Stickstoff,
wobei der Füllstandssensor (6) einen oberen Schaltpunkt, an dem er den Hochdruckverdichter (7) in Betrieb setzt und das erste Magnetventil (2) schließt, sowie einen unteren Schaltpunkt aufweist, an dem er in Abhängigkeit vom Druck im Speicherbehälter (8) entweder das erste Magnetventil (2) öffnet oder den Hochdruckverdichter (7) abstellt,
**dadurch gekennzeichnet,**
daß dem ersten Magnetventil (2) ein abwechselnd mit diesem betätigtes zweites Magnetventil (20) zugeordnet ist, welches ausgangsseitig über eine Drossel (21) mit der Atmosphäre in Verbindung steht,
daß die Magnetventile (2, 20) eingangsseitig über eine einstellbare Drossel (3) an mindestens einen Stickstoff-Separator (4) angeschlossen sind, der von einem Luftverdichter (13) gespeist wird, und
daß dem Ausgang des Separators (4) ein Stickstoff-Reinheitssensor (22) zugeordnet ist, der zusätzlich zu der Steuereinrichtung die Magnetventile (2, 20) betätigt.

2. Vorrichtung nach Anspruch 1, dadurch gekennzeichnet, daß der Reinheitssensor (22) die einstellbare Drossel (3) steuert.

3. Vorrichtung nach Anspruch 1 oder 2, dadurch gekennzeichnet, daß dem Reinheitssensor (22) eine Alarmfunktion zugeordnet ist.

4. Vorrichtung nach einem der Ansprüche 1 bis 3, dadurch gekennzeichnet, daß stromab des Separators (4) eine Einlaßleitung zur Fremdeinspeisung von Stickstoff vorgesehen ist und daß der Füllstandssensor (6) einen unter dem unteren Schaltpunkt liegenden dritten Schaltpunkt aufweist, an dem er bei geöffnetem erstem Magnetventil (2) die Fremdeinspeisung von Stickstoff zuschaltet.

5. Vorrichtung nach Anspruch 4, dadurch gekennzeichnet, daß der Füllstandssensor (6) einen unter dem dritten Schaltpunkt liegenden vierten Schaltpunkt aufweist, an dem er bei geöffnetem ersten Magnetventil (2) den Hochdruckverdichter (7) abstellt.

6. Vorrichtung nach einem der Ansprüche 1 bis 5, dadurch gekennzeichnet, daß der Luftverdichter (13) ein durch Öleinspritzung gekühlter Kompressor ist, dem luftauslaßseitig ein Luftkühler (14) mit Kondensatabscheider (15) und ölauslaßseitig ein Ölkühler (19) nachgeschaltet sind, und daß in Reihe vor dem Ölkühler (19) und in Reihe hinter dem Kondensatabscheider (15) ein Wärmetauscher (18) zum Vorwärmen der gekühlten Luft unter Nutzung der Abwärme des Öls vorgesehen ist.

7. Vorrichtung nach Anspruch 6, dadurch gekennzeichnet, daß ein mit der Öltemperatur beaufschlagtes Thermostatventil den Ölfluß zum Ölkühler (19) und zu einer den Ölkühler umgehenden Bypassleitung (17) regelt.

8. Vorrichtung nach Anspruch 6 oder 7, dadurch gekennzeichnet, daß der Wärmetauscher (18) zur Nutzung der Abstrahlungswärme in nächster Nähe des Separators (4) angeordnet ist.

9. Vorrichtung nach einem der Ansprüche 6 bis 8, dadurch gekennzeichnet, daß dem Kondensatabscheider (15) ein Öl-Wasser-Trenner (16) nachgeschaltet ist.

## Claims

1. Apparatus for producing nitrogen at high pressure for at least one consumer, particularly for at least one injection moulding machine, including
an inflatable balloon (5), which is connected via a first magnetic valve (2) to a nitrogen source,
a high pressure storage container (8), which is connectable to the consumer,
a high pressure compressor (7), whose inlet is connected to the balloon and whose outlet is connected to the storage container,
a control device for the first magnetic valve and the high pressure compressor, the control device including a filling level sensor (6) actuated by the balloon and a pressure switch (10) connected to the storage container, and
including a recovery line (11), which is connected to the inflatable balloon (5) and may be connected to the consumer, for the nitrogen which is expanded in the consumer,
whereby the filling level sensor (6) has an upper switching point, at which it starts the high pressure compressor (7) and closes the first magnetic valve (2), and a lower switching point at which it either opens the first magnetic valve (2) or switches the high pressure compressor (7) off, depending on the pressure in the storage container (8),
characterised in that
associated with the first magnetic valve (2) there is a second magnetic valve (20) which is alternately actuated with it and whose outlet communicates via a throttle (21) with the atmosphere,
that the inlets of the magnetic valves (2, 20) are connected via an adjustable throttle (3) to at least one nitrogen separator (4), which is supplied by an air compressor (13), and
that associated with the outlet of the separator (4) there is a nitrogen purity sensor (22) which actuates the magnetic valves (2, 20) additionally to the control device.

2. Apparatus as claimed in Claim 1, characterised in that the purity sensor (22) controls the adjustable throttle (3).

3. Apparatus as claimed in Claim 1 or 2, characterised in that an alarm function is associated with the purity sensor (22).

4. Apparatus as claimed in one of Claims 1 to 3, characterised in that provided downstream of the separator (4) there is an inlet line for the separate injection of nitrogen and that the filling level sensor (6) has a third switching point, which is situated below the lower switching point and at which it switches on the separate injection of nitrogen, when the first magnetic valve (2) is open.

5. Apparatus as claimed in Claim 4, characterised in that the filling level sensor (6) has the fourth switching point which is situated below the third switching point and at which it turns off the high pressure compressor (7), when the first magnetic valve (2) is open.

6. Apparatus as claimed in one of Claims 1 to 5, characterised in that the air compressor (13) is a compressor which is cooled by oil injection and connected on the air outlet side of which there is an air cooler (14) with a condensate separator (15) and on the oil outlet side of which there is an oil cooler (19) and that provided in series upstream of the oil cooler (19) and in series downstream of the condensate separator (15) there is a heat exchanger (18) for preheating the cooled air using the waste heat of the oil.

7. Apparatus as claimed in Claim 6, characterised in that a thermostatic valve acted on by the oil temperature controls the oil flow to the oil cooler (19) and to a bypass line (17) which bypasses the oil cooler.

8. Apparatus as claimed in Claim 6 or 7, characterised in that the heat exchanger (18) is arranged in the immediate vicinity of the separator (4) to utilise the radiant heat.

9. Apparatus as claimed in one of Claims 6 to 8, characterised in that an oil-water separator (16) is connected downstream of the condensate separator (15).

## Revendications

1. Dispositif pour la production d'azote sous haute pression pour au moins un appareil d'utilisation, en particulier pour au moins une machine de moulage par injection, comportant
un ballon gonflable (5) qui est relié, par une première électrovanne (2), à une source d'azote,
un réservoir à haute pression (8) qui peut être relié à l'appareil d'utilisation,
un compresseur à haute pression (7) qui est relié côté aspiration au ballon et côté refoulement au réservoir,
un dispositif de commande de la première électrovanne et du compresseur à haute pression, ce dispositif comprenant un capteur de niveau (6) actionné par le ballon et un pressostat (10) relié au réservoir, et
une conduite (11) de récupération de l'azote détendu dans l'appareil d'utilisation reliée au ballon gonflable (5) et pouvant être reliée à l'appareil d'utilisation,
le capteur de niveau (6) ayant un point supérieur de fonctionnement où il met en marche le compresseur à haute pression (7) et ferme la première électrovanne (2) et un point inférieur de fonctionnement où, en fonction de la pression dans le réservoir (8), soit il ouvre la première électrovanne (2), soit il arrête le compresseur à haute pression (7),
caractérisé par le fait
qu'à la première électrovanne (2) est adjointe une deuxième électrovanne (20) actionnée en alternance avec celle-ci et en communication du côté sortie avec l'atmosphère par un étranglement (21),
que les électrovannes (2, 20) sont reliées du côté entrée, par un étranglement réglable (3), à au moins un séparateur d'azote (4) qui est alimenté par un compresseur d'air (13), et
qu'à la sortie du séparateur (4) est prévu un capteur de pureté d'azote (22) qui, en plus du dispositif de commande, actionne les électrovannes (2, 20).

2. Dispositif selon la revendication 1, caractérisé par le fait que le capteur de pureté (22) commande l'étranglement réglable (3).

3. Dispositif selon l'une des revendications 1 et 2, caractérisé par le fait qu'au capteur de pureté (22) est attribuée une fonction d'alarme.

4. Dispositif selon l'une des revendications 1 à 3, caractérisé par le fait qu'en aval du séparateur (4) est prévue une conduite d'entrée pour l'alimentation extérieure en azote et que le capteur de niveau (6) a un troisième point de fonctionnement situé au-dessous du point inférieur de fonctionnement et où, lorsque la première électrovanne (2) est ouverte, il met en circuit l'alimentation extérieure en azote.

5. Dispositif selon la revendication 4, caractérisé par le fait que le capteur de niveau (6) a un quatrième point de fonctionnement situé au-dessous du troisième et où, lorsque la première électrovanne (2) est ouverte, il arrête le compresseur à haute pression (7).

6. Dispositif selon l'une des revendications 1 à 5, caractérisé par le fait que le compresseur d'air (13) est un compresseur refroidi par injection d'huile en aval duquel sont montés, du côté sortie d'air, un refroidisseur d'air (14) avec séparateur de condensat (15) et, du côté sortie d'huile, un refroidisseur d'huile (19), et qu'en série avant le refroidisseur d'huile (19) et en série après le séparateur de condensat (15) est prévu un échangeur de chaleur (18) pour le préchauffage de l'air refroidi au moyen de la chaleur perdue de l'huile.

7. Dispositif selon la revendication 6, caractérisé par le fait qu'une vanne thermostatique commandée par la température de l'huile règle le débit d'huile allant au refroidisseur d'huile (19) et à une conduite de dérivation (17) qui contourne le refroidisseur d'huile.

8. Dispositif selon l'une des revendications 6 et 7, caractérisé par le fait que l'échangeur de chaleur (18) est, pour l'utilisation de la chaleur rayonnante, placé à proximité immédiate du séparateur (4).

9. Dispositif selon l'une des revendications 6 à 8, caractérisé par le fait qu'en aval du séparateur de condensat (15) est monté un séparateur huile-eau (16).
